# EUROPÄISCHE PATENTSCHRIFT

(11) **EP 1 372 975 B1**
(45) Veröffentlichungstag und Bekanntmachung des Hinweises auf die Patenterteilung: **03.01.2007**
(21) Anmeldenummer: 02717972.0
(22) Anmeldetag: 25.02.2002
(51) Int. Cl.: B41M 3/14, B41M 5/26, B42D 15/10

(54) **UNSICHTBARE LASERBESCHRIFTUNG ALS SICHERHEITSMERKMAL FÜR KUNSTSTOFFKARTEN UND VORRICHTUNGEN ZUM DETEKTIEREN VON SICHERHEITSMARKIERUNGEN**
INVISIBLE LASER WRITING FOR USE AS SECURITY FEATURE FOR PLASTIC CARDS AND DEVICES FOR THE DETECTION OF SECURITY MARKS
INSCRIPTION LASER INVISIBLE SERVANT DE CARACTERISTIQUE DE SECURITE DE CARTES PLASTIQUES ET DISPOSITIFS POUR LA DETECTION DE MARQUES DE SECURITÉ

(30) Priorität: 30.03.2001 DE 10115949
(43) Veröffentlichungstag der Anmeldung: 02.01.2004
(73) Patentinhaber: BÖWE CARDTEC GmbH, 33106 Paderborn (DE)
(72) Erfinder: BORMANN, Frank, C., 33818 Leopoldshöhe (DE); FISCHER, Dirk, 33106 Paderborn (DE); KAPPE, Frank, 33378 Rheda-Wiedenbrück (DE); SCHUMACHER, Matthias, 33178 Borchen (DE)
(74) Vertreter: Hanewinkel, Lorenz
(86) Internationale Anmeldenummer: PCT/DE2002/000663
(87) Internationale Veröffentlichungsnummer: WO 2002/078965

(56) Entgegenhaltungen:
- WO-A-02/26507
- GB-A- 2 186 236
- US-A- 4 544 181
- US-A- 5 522 623

## Beschreibung

Die Erfindung betrifft eine Kunststoffkarte nach Anspruch 1 bestehend aus einer Overlayschicht und mindestens einer Kemschicht einer Markierungsschicht, die in sich mittels NIR- oder UV-Strahlen in Form von für ein unbewaffnetes Auge unsichtbaren Sicherheitsmerkmalen in ihren Lumineszenzeigenschaften so veränderbar ist, dass die Sicherheitsmerkmale durch eine Anregung mittels einer Beleuchtungsquelle infolge der markierungsgemäßen Lumineszenzänderung detektierbar sind. Die Erfindung betrifft ebenfalls Vorrichtungen zum Detektieren von Sicherheitsmarkierungen nach Ansprüchen 10 bis 12.

Eine derartige Kunststoffkarte ist in der nachveröffentlichten WO 02/26507 A1 beschrieben. Die Karte ist auf einer Kemschicht mit einer Lumineszenzschicht präpariert, die zur Personalisierung des Sicherheitsmerkmals in situ mit einem energiereichen Strahl so verändert wird, dass bei normalen Lichtverhältnissen, die keine Lumineszenz erregt, das Merkmal nicht erkennbar ist, jedoch unter Anregung der Lumineszenz durch dazu geeignete Strahlung, wie NIR- oder UV-Strahlung, das Merkmal lesbar und auswertbar ist.

Die Kernschicht ist mit einer Overlayschicht abgedeckt, die sichtbares Licht und energiereiche Strahlung sowie die Anregungsstrahlung passieren lässt. Die Forderung, dass das personalisierte Sicherheitsmerkmal bei normalen Lichtverhältnissen nicht erkennbar sein soll, schränkt die Auswahl des Lumineszenz- und Kemschichtmaterials ein und erfordert eine sorgfältige Dosierung der energiereichen Strahlung. Zudem stehen die Auslesemittel Unbefugten ohne Schwierigkeiten zur Verfiigung.

Weiterhin ist aus der GB 2,186,236 A eine Kunststoffkarte bekannt, die einen in situ beschriftbaren Bereich trägt, der eine selbstentwickelte laserbeschreibbare Photoemulsionsschicht trägt. Die Emulsion ist von einer transparenten Schutzschicht überdeckt. Die beschriebenen Bereiche sind in ihrem Reflexionsvermögen verändert und werden mit Licht beschienen im sichtbaren Bereich ausgelesen. Zum Beschreiben dient insbesondere eine NIR-Laserdiode.

Allgemein wird eine Laserbeschriftung von Kunststoffkarten so ausgeführt, dass sie im optisch sichtbaren Spektralbereich (750-400 nm) lesbar ist. In der Regel werden Graustufen durch Karbonisierung von Russ dotierten Schichten (z. B. PVC, PET, ABS, Polycarbonat) erzeugt.

Diese laserbeschrifteten Merkmale im Kartenmaterial können maschinenlesbar sein (OCR-Zeile, Barcode, 2D-Barcode, Data Matrix Code, etc.). Nachteil ist, dass die Personalisierung sichtbar ist und durch Fälschungen angreifbar ist. Ferner wird wertvoller Kartenplatz durch die sichtbare Beschriftung verbraucht.

Zur Erstellung einer unsichtbaren Beschriftung sind spezielle Materialien (Farbstoffe, Lack, Druckfarbe etc.) und Beschriftungsverfahren notwendig, die geheim und schwer nachzuahmen sind.

Zur Überprüfung der Echtheit von Kunststoffkarten (speziell Bankkarten, Identifikationskarten z. B. Führerschein, Pass etc.) sind eine Reihe von Sicherheitsmerkmalen (Laserbeschriftung (DE 29 07 004) insbesondere Mikroschrift und farbige Beschriftung, Einbringen von UV-Lumineszenzfarbstoffen) bekannt. Wesentlich ist hierbei, dass die Sicherheitsmerkmale fälschungssicher sind, daher befinden sie sich in der Regel im Kartenkörper und können nachträglich nicht verändert oder eingebracht werden, ohne die Karte zu zerstören.

Eine Forderung der Nutzer der vorbekannten Karten ist, dass das Auslesen des Sicherheitsmerkmals mit einfachen Mitteln möglich sein soll. Zum Beispiel lässt sich die Mikroschrift mit einer Lupe oder das Lumineszenzmerkmal mit einer UV-Lampe (365 nm Anregung) überprüfen.

Der Erfindung liegt die Aufgabe zugrunde, die Fälschungssicherheit einer Kunststoffkarte weiter zu verbessern.

Die Lösung der gestellten Aufgabe ist durch die technische Lehre des Anspruches 1 gekennzeichnet; vorteilhafte Ausgestaltungen der Karte sind in den Unteransprüchen angegeben. Weitere Unteransprüche betreffen die Bearbeitungs- und Lesevorrichtung der Karte.

Ein laserbeschriftetes Merkmal welches nur im Ultravioletten-Bereich (< 400 nm) oder im Infraroten Bereich (> 750 nm) auslesbar ist, gilt als unsichtbar und erfordert spezielle Hilfsmittel zur Verifikation. Der Begriff "Laserbeschriftung" schließt hierbei auch unsichtbare Beschriftungen mit anderen Geräten als Laser ein.

Für eine unsichtbare Laserbeschriftung ist es hierbei wichtig, keine sichtbare Markierung oder sichtbare Veränderung eines Lumineszenzfarbstoffes oder allgemein eines Farbstoffes, Pigmentes, Dotierungsmittels hervorzurufen. Die Erfindung beansprucht hierbei zwei verschiedene Ausführungsformen:
1. Einbringung und Auslesung eines personalisierten Sicherheitsmerkmals im NIR-Bereich.
2. Einbringung und Auslesung eines personalisierten Sicherheitsmerkmals im UV-Bereich.

Es handelt sich also um eine nichtsichtbare Markierung von Kunststoffkarten, die im nichtsichtbaren Bereich auslesbar ist.

Es wird also eine nichtsichtbare Markierung in dem Kemmaterial der Kunststoffkarte durch eine Overlayschicht hindurch angebracht. Zur Echtheitsüberprüfung wird dieses unsichtbare Merkmal durch Beleuchtung mit einer Infrarot- oder UV- Beleuchtung im Infrarot- oder UV-Bereich sichtbar gemacht.

Das Sicherheitsmerkmal ist wie die sichtbare Laserbeschriftung im Gegensatz zu bekannten lumineszierenden Sicherheitsmerkmalen personalisierbar, d. h. für jede Karte individuell einstellbar. Hierdurch können hohe Stückzahlen von Karten produziert werden und danach erst personalisiert werden. Dies ergibt den Vorteile bei der Herstellung, weil die Produktion wesentlich kostengünstiger ohne vorherige Personalisierung durchgeführt werden kann. Ausserdem ergibt sich eine höhere Sicherheit, weil ein personalisiertes Merkmal schwerer fälschbar ist und das Sicherheitsmerkmal erst bei der Personalisierung generiert wird. Daher ergibt sich eine verbesserte Sicherheit, weil die Personalisierung der Karte mit, schon während der Massenproduktion eingebrachten Sicherheitsmerkmalen, zusammen wirkt.

Der Ort der Anbringung des Sicherheitsmerkmals ist im Gegensatz zu einer sichtbaren Laserbeschriftung ohne Hilfsmittel nicht erkennbar.

In dem unsichtbaren Sicherheitsmerkmal können große Datenmengen in Form eines Data Matrix Codes verborgen werden, die das Design des Artworks der Karte nicht beeinflussen, aber die Sicherheit gerade als maschinenlesbares Merkmal in Kombination mit der Chipkarte erhöhen. Dies hat den besonderen Vorteil, dass praktisch die gesamte Fläche der Karte für die (unsichtbare) Beschriftung mit z. B. einem Data-Matrix-Code oder einem Text verwendet werden kann.

Wesentlich nach der Erfindung ist also ein Kartenaufbau mit personalisierten Sicherheitselementen, die aus mindestens einem unsichtbaren, jedoch im NIR- oder UV-Bereich lesbaren Merkmal bestehen. Insgesamt ergibt sich damit der Vorteil, dass die gesamte Fläche der Karte zur Personalisierung zur Verfügung steht. Das unsichtbare, personalisierte Sicherheitsmerkmal ist damit unabhängig von der sichtbaren Information auf der Karte.

Die Erfindung beansprucht hierbei folgende Ausführungen:
- Nur im NIR und/oder im UV transparente Overlayschicht (z. B. PC, PVC, PET, ABS, PE, PP etc.)
- NIR oder UV absorbierende Kemschicht oder Markierungsschicht.
- Strahl zur Beschriftung (Personalisierung) (z. B.: mittels Laser oder UV-Lampe + Maske)
- Beleuchtungsquelle zum Auslesen des unsichtbaren Merkmals (z. B.: Deuterium-, Hg-, Na-Lampe, Halogen-Lampe, Laser)
- Detektor (CCD-Kamera, CMOS-Kamera, Zeilenkamera, Photodetektor) zum Auslesen eines maschinenlesbaren Merkmals (z. B. Data-Matrix-Code)

Alle in den Unterlagen, einschließlich der Zusammenfassung, offenbarten Angaben und Merkmale, insbesondere die in den Zeichnungen dargestellte räumliche Ausbildung sind wesentlich, soweit sie einzeln oder in Kombination gegenüber dem Stand der Technik neu sind.

Im Folgenden wird die Erfindung anhand von Zeichnungen näher erläutert. Hierbei gehen aus den Zeichnungen und ihrer Beschreibung wesentliche Merkmale und Vorteile der Erfindung hervor.

Es zeigen:
Fig. 1: schematisiert das Einbringen und Auslesen von personalisierten Sicherheitsmerkmalen in einen Kartenkörper.
Fig. 2: Wellenlängen-Transmissionsdiagramm einer opaken Overlayschicht im UV und NIR
Fig. 3: Wellenlängen-Transmissionsdiagramm einer opaken Overlayschicht für den Fall einer NIR-Markierung
Fig. 4: Wellenlängen-Transmissionsdiagramm einer opaken Overlayschicht für den Fall einer UV-Markierung
Fig. 5: Wellenlängen-Transmissionsdiagramm einer transparenten Overlayschicht - Stand der Technik -
Fig. 6: Emission und Anregung der Markierung in der Kemschicht oder Markierungsschicht bei UV-Markierung
Fig. 7: Wellenlängen-Transmissionsdiagramm einer opaken Kemschicht oder Markierungsschicht
Fig. 8: Wellenlängen-Transmissionsdiagramm einer transparenten Kemschicht oder Markierungsschicht

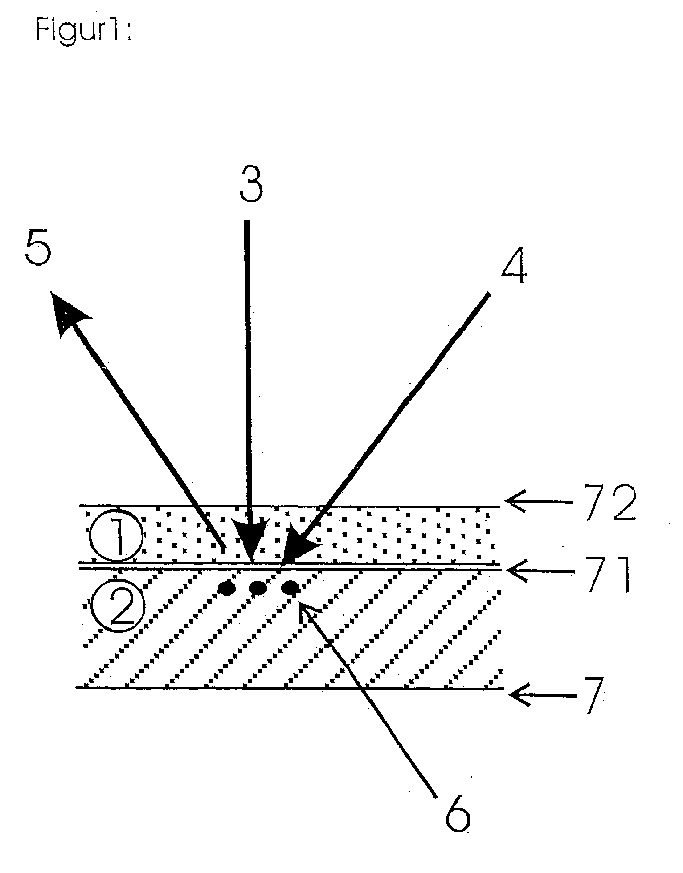

Gemäß Fig. 1 besteht die zu personalisierende Karte mindestens aus einer oberen, nur im NIR- und/oder UV-Bereich durchsichtigen Overlayschicht 1 und einer darunter angeordneten Kemschicht oder Markierungsschicht 2.

Die Erfindung beansprucht drei Ausführungsformen für den Schichtaufbau:
1. Die Overlayschicht 1 besteht aus nur im NIR- und/oder UV-Bereich transparenten Material. Die Kemschicht oder Markierungsschicht 2 ist im sichtbaren Bereich transparent und im NR oder UV- Bereich absorbierend. Auf oder in dieser Schicht 2 können Markierungen oder Beschriftungen erzeugt werden, die mit unbewaffneten Auge unsichtbar sind. In einer bevorzugten Ausführungsform ist mindestens eine Druckschicht 7 unter der Kemschicht oder Markierungsschicht 2 angeordnet.
2. Die Overlayschicht 1 besteht aus nur im NIR- und/oder UV-Bereich transparentem Material. Die Kernschicht oder Markierungsschicht 2 ist im sichtbaren Bereich nicht transparent und im NIR oder UV-Bereich absorbierend. Auf oder in dieser Schicht 2 können Markierungen oder Beschriftungen erzeugt werden, die mit unbewaffnetem Auge unsichtbar sind. In einer bevorzugten Ausführungsform ist mindestens eine Druckschicht 71 oberhalb der Kemschicht oder Markierungsschicht 2 angeordnet.
3. Die Overlayschicht 1 besteht aus einem nur im NIR- und/oder UV-Bereich transparentem und im sichtbaren Bereich nicht transparentem Material. Die Kernschicht oder Markierungsschicht 2 ist im NIR oder UV-Bereich absorbierend. Auf oder in dieser Schicht 2 können Markierungen oder Beschriftungen erzeugt werden, die mit einem Detektor, der im NIR oder UV-Bereich empfindlich ist auslesbar sind. In einer bevorzugten Ausführungsform ist mindestens eine Druckschicht 72 oberhalb der Overlayschicht 1 angeordnet.

Selbstverständlich kann eine Vielzahl weiterer Schichten vorgesehen sein und insbesondere muss auch nicht die zu personalisierende Kemschicht oder Markierungsschicht direkt unterhalb der Overlayschicht 1 angeordnet sein.

Statt der opaken Folie oder Schicht 1 können auch folgende weiteren Stoffe verwendet werden:
- Sicherheitsdruckfarben
- Lacke
- Substanzen, die einen Haftvermittler oder Klebstoffsysteme enthalten.

Bei der Verwendung von Druckverfahren können folgende Verfahren der Aufbringung verwendet werden:
- Offset
- Siebdruck
- Thermotransfer-Verfahren

Bevorzugt ist die Overlayschicht eine so genannte dielektrische Schicht. Eine solche Schicht reflektiert im sichtbaren Bereich und ist im NIR und/oder UV-Bereich durchlässig. Eine dielektrische Schicht kann aus einer Vielzahl von übereinander angeordneten Schichten mit unterschiedlichen Brechungsindices bestehen. Die Kernschicht oder Markierungsschicht 2 ist eine NIR- und/oder UV absorbierende, entsprechend dotierte Schicht.

In einer bevorzugten Ausführung werden Beispiele für im sichtbaren Bereich opake Folien oder Schichten angegeben:
- Mit Cr203 dotierte (etwa grün aussehende) Folien oder Schichten
- Mit Fe2O3 dotierte (schwarz aussehende) Folien oder Schichten
- Mit feinkörnigem Ti02 (weiß erscheinende) Folien oder Schichten mit nanokristallinen Körnchen bei einer Korngröße von < 500 nm.

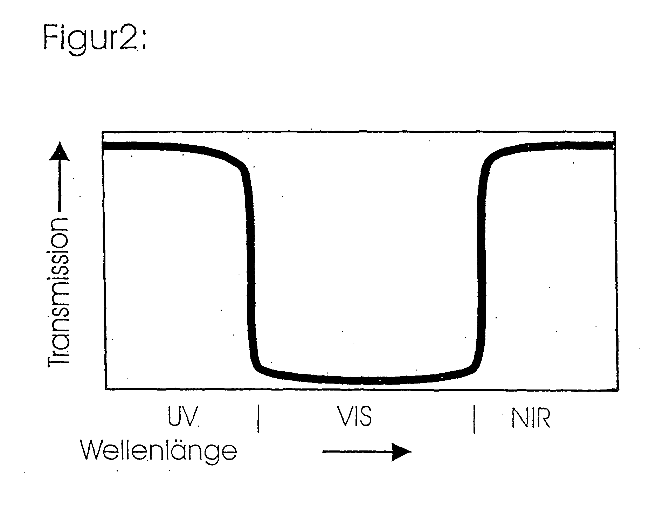

Die Fig. 2 bis 5 zeigen jeweils Diagramme, bei denen auf der Abszisse die Wellenlänge in den Bereichen UV, VIS und NIR aufgetragen ist, während auf der Ordinate die Transparenz aufgetragen ist.

Die Fig. 2 zeigt die Transparenz einer opaken Overlayschicht 1, die lediglich im UV- und NIR-Bereich transparent ist. Ein in diesen Bereichen wirksamer Markierer kann dann die Markierung 6 durch die Overlayschicht 1 hindurch in die Kemschicht oder Markierungsschicht 2 einbringen. Eine solche Folie kann, entsprechend des oben beschriebenen Falles 3 für den Schichtaufbau, eingesetzt werden.

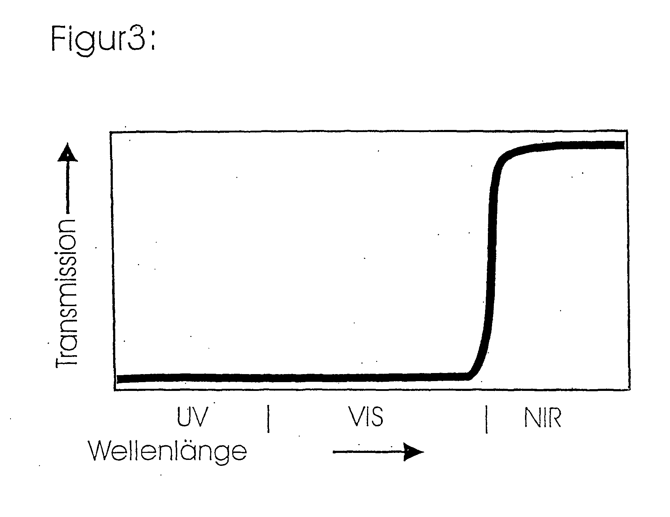

Fig. 3 zeigt, dass die Overlayschicht 1 sowohl im UV- als auch im VIS-Bereich undurchlässig ist. Die Markierung 7 wird daher mit einem NIR-Markierer in die Kemschicht oder Markierungsschicht 2 eingebracht. Eine solche Folie kann, entsprechend des oben beschriebenen Falles 3 für den Schichtaufbau, eingesetzt werden.

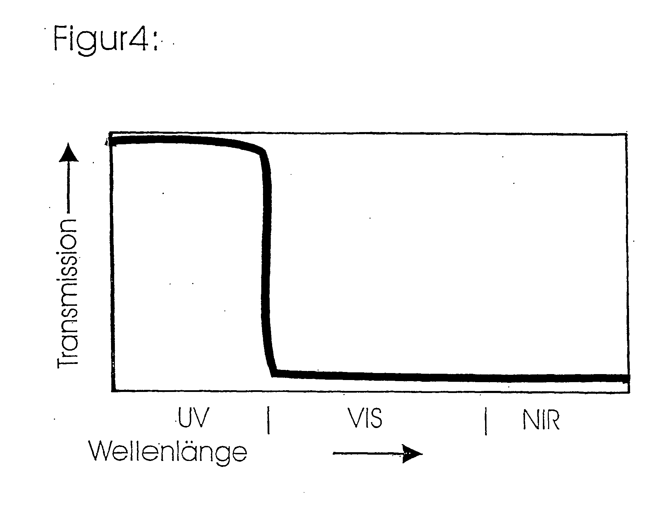

Fig. 4 zeigt die analoge Darstellung mit der Einbringung einer UV-Markierung in die Kemschicht oder Markierungsschicht 2. Eine solche Folie kann, entsprechend des oben beschriebenen Falles 3 für den Schichtaufbau, eingesetzt werden.

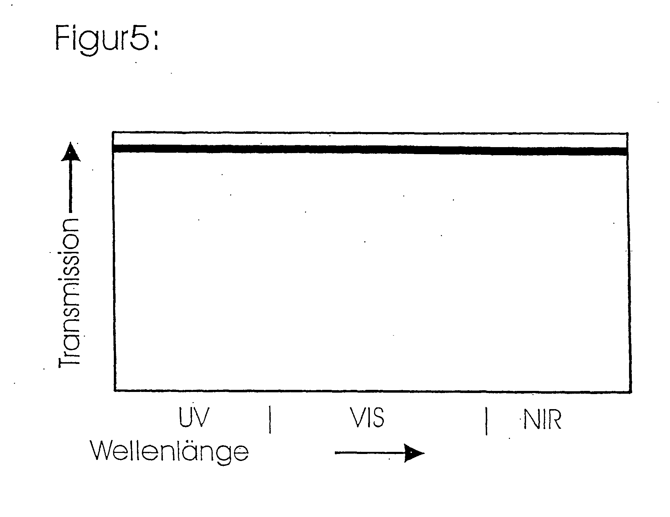

Fig. 5 zeigt die Durchlässigkeit einer in den drei Bereichen UV-, VIS- und NIR- Bereich transparenten Overlayschicht 1, aus dem Stand der Technik.

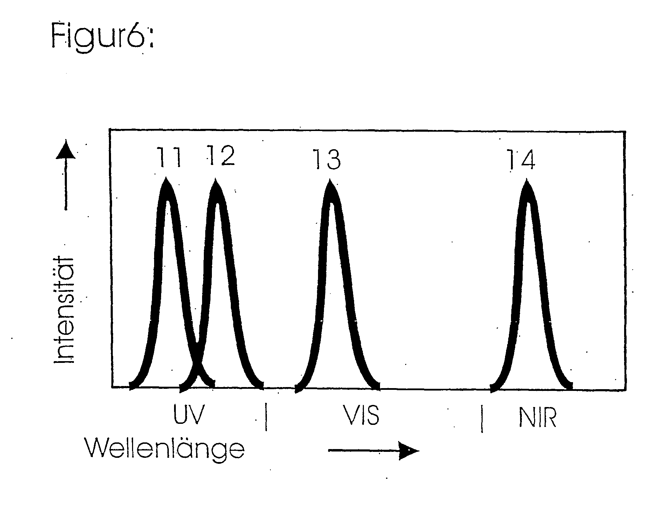

Fig. 6 zeigt die Emission und Anregung einer UV-Markierung in der Kemschicht oder Markierungsschicht 2. Auf der Abszisse ist die Wellenlänge und auf der Ordinate die Intensität aufgetragen. Bei Pos. 11 liegt der Peak der Anregung, während dessen die Markierung 6 mit den Peaks bei Pos. 12 (im UV-Bereich), Pos. 13 (im sichtbaren Bereich) und Pos. 14 (im NIR-Bereich) antwortet. Selbstverständlich ist dieses Beispiel nicht beschränkend zu verstehen. Alternativ kann die Emission nur im UV- oder nur im NIR-Bereich liegen.

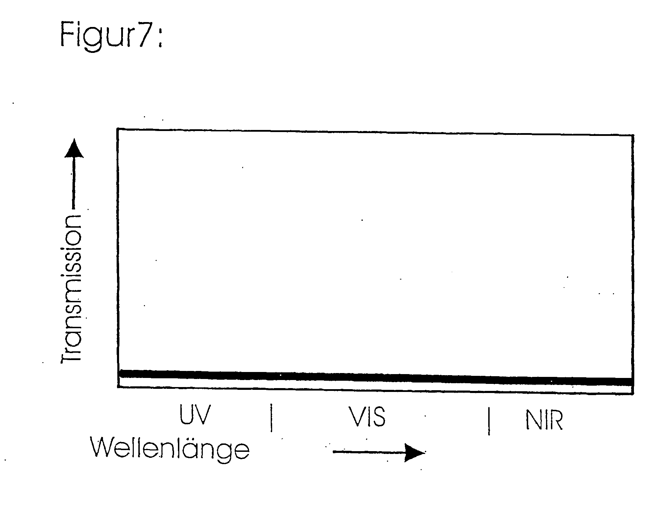

Fig. 7 zeigt das Lichtdurchlässigkeitsprogramm einer Kern-Schicht 2, die im gesamten UV-, VIS und NIR Bereich undurchlässig ist. Eine solche Folie kann, entsprechend der oben beschriebenen Fälle 2 und 3 für den Schichtaufbau, eingesetzt werden.

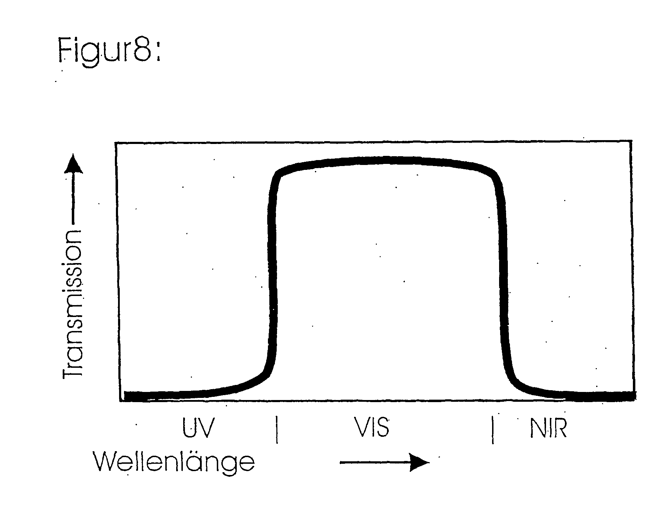

Fig. 8 zeigt das Lichtdurchlässigkeitsprogramm für eine Kern-Schicht 2, die im UV- und NIR Bereich undurchlässig ist. Eine solche Schicht kann, entsprechend des oben beschriebenen Fällen 1 und 3 für den Schichtaufbau, eingesetzt werden.

### Zeichnungslegende

- 1: Overlayschicht
- 2: Kernschicht oder Markierungsschicht
- 3: Markierer
- 4: Beleuchtungsquelle
- 5: Detektor
- 6: Markierung
- 7: Druckschicht
- 11: Intensität des Emissionsstrahlungspeaks
- 12: Intensität des Emissionsstrahlungspeaks
- 13: Intensität des Emissionsstrahlungspeaks
- 14: Intensität des Emissionsstrahlungspeaks
- 71: Druckschicht
- 72: Druckschicht

## Patentansprüche

1. Kunststoffkarte bestehend aus einer Overlay-Schicht (1) und mindestens einer Kemschicht als eine Markierungsschicht (2), die in situ mittels NIR- oder UV-Strahlen in Form von für ein unbewaffnetes Auge unsichtbaren Sicherheitsmerkmalen in ihren Lumineszenzeigenschaften so veränderbar ist, dass die Sicherheitsmerkmale durch eine Anregung mittels einer Beleuchtungsquelle (4 infolge der markierungsgemäßen Lumineszenz detektierbar sind,
**dadurch gekennzeichnet, dass** die Overlayschicht (1) nur im NIR- und/oder im UV-Bereich transparent ist, und dass, wenn die Beleuchtungsquelle (4) NIR- und/oder UV-Licht auf die Kunststoffkarte strahlt, die Sicherheitsmerkmale gemäß der Lumineszenzveränderung detektierbar sind, für das Auge jedoch unsichtbar sind.

2. Kunststoffkarte nach Anspruch 1, **dadurch gekennzeichnet, dass** auch die Overlayschicht (1) mit einer unsichtbaren Beschriftung markiert ist.

3. Kunststoffkarte nach einem der Ansprüche 1 öder 2, **dadurch gekennzeichnet, dass** das Sicherheitsmerkmal aus einer großen Datenmenge in Form eines Data-Matrix-Codes besteht.

4. Kunststoffkarte nach einem der Ansprüche 1 bis 3, **dadurch gekennzeichnet, dass** die Markierungsschicht (2) im NIR- und/oder UV-Bereich absorbierend dotiert ist.

5. Kunststoffkarte nach einem der Ansprüche 1 bis 4, **dadurch gekennzeichnet, dass** die Markierungsschicht (2) im gesamten UV-, VIS- und NIR-Bereich lichtundurchlässig ist.

6. Kunststoffkarte nach einem der vorstehenden Ansprüche, **dadurch gekennzeichnet, dass** die Markierungsschicht (2) aus einem modifizierten Klebestoffsystem besteht, das bei einer UV-Bestrahlung eine Vernetzungsreaktion ausführt und dabei lokal seine Lumineszenzeigenschaften verändert.

7. Kunststoffkarte nach einem der vorstehenden Ansprüche, **dadurch gekennzeichnet, dass** die Markierungsschicht (2) als eine Druckfarbschicht oder als ein Lack oder eine Substanz, die einen Klebstoff oder Haftvermittler enthält, ausgebildet ist.

8. Kunststoffkarte nach einem der vorstehenden Ansprüche, **dadurch gekennzeichnet**, das die Overlayschicht (1) als eine dielektrische Schicht ausgebildet ist.

9. Kunststoffkarte nach einem der vorstehenden Ansprüche, **dadurch gekennzeichnet, dass** der Markierungsschicht (2) ein Lumineszenzfarbstoff angeordnet ist, der bei einer Bestrahlung mit Licht einer Wellenlänge von etwa 266 mm chemisch sich so verändert, dass sich das Emissionsspektrum hinsichtlich seiner Identität und seiner Wellenlänge ändert.

10. Vorrichtung zum Detektieren von Sicherheitsmarkierungen mittels einer Lumineszenz anregenden Beleuchtung in einer Kunststoffkarte gemäß einem der Ansprüche 1 bis 9, **dadurch gekennzeichnet, dass** die Beleuchtungsquelle (4) ein NIR-Diodenlaser mit Licht von ca. 800 nm Wellenlänge ist.

11. Vorrichtung zum Detektieren von Sicherheitsmarkierungen mittels einer Lumineszenz anregenden Beleucht in einer Kunststoffkarte gemäß der Ansprüche 1 bis 9, **dadurch gekennzeichnet, dass** die Beleuchtungsquelle (4) eine Deuterium- oder Hg- oder Na- oder Halogen-Lampe oder ein Laser ist.

12. Vorrichtung zum Detektieren von Sicherheitsmarkierungen mittels einer Lumineszenz anregenden Beleuchtung in einer Kunststoffkarte gemäß einem der Ansprüche 1 bis 9, **dadurch gekennzeichnet, dass** die Beleuchtungsquelle (4) eine Leuchtdiode mit Licht von ca. 365 nm Wellenlänge oder ein Mikrochiplaser mit einer Leitung von 1 mW und 355 nm oder 266 nm Wellenlänge ist.

13. Vorrichtung nach einem der Ansprüche 10 bis 12, **dadurch gekennzeichnet, dass** das Lumineszenzlicht der Sicherheitsmerkmale mit einem Detektor (5) aufgenommen wird, der eine CMOS-Kamera oder eine Zeilenkamera oder ein Photodetektor ist, der zum Auslesen eines maschinenlesbaren Sicherheitsmerkmals, wie Data-Matrix-Code, geeignet ist.

## Claims

1. Plastic card consisting of an overlay layer (1) and at least one core layer functioning as a marking layer (2), the luminescence characteristics of which can be changed in-situ by means of NIR or UV radiation, forming security features which are invisible to the naked eye, in such a way that the security features can be detected by excitation by means of a lighting source (4), because of the luminescence of the mark, **characterized in that** the overlay layer (1) is only transparent in the NIR and/or in the UV region, and **in that**, if the lighting source (4) radiates NIR and/or UV light on the plastic card, the security features are detectable due to the modification of luminescence, but are invisible to the eye.

2. Plastic card according to claim 1, **characterized in that** the overlay layer (1) is also marked with an invisible writing.

3. Plastic card according to one of the claims 1 or 2, **characterized in that** the security feature consists of a large data set in form of a data matrix code.

4. Plastic card according to one of the claims 1 to 3, **characterized in that** the marking layer (2) is doped to absorb light in the NIR and/or UV region.

5. Plastic card according to one of the claims 1 to 4, **characterized in that** the marking layer (2) is opaque in the entire UV, VIS and NIR region.

6. Plastic card according to one of the above claims, **characterized in that** the marking layer (2) consists of a modified adhesive system, which implements a cross-linkage reaction during UV irradiation and locally changes its luminescence characteristics.

7. Plastic card according to one of the above claims, **characterized in that** the marking layer (2) is implemented as a printing ink film or as a lacquer or a substance containing an adhesive or an adhesion mediator.

8. Plastic card according to one of the above claims, **characterized in that** the overlay layer (1) is designed as a dielectric layer.

9. Plastic card according to one of the above claims, **characterized in that** a luminescent dye is arranged in the marking layer (2), which, when irradiated by light with a wavelength of approximately 266 mm, chemically changes in such a way that the identity and wavelength of the emission spectrum are modified.

10. Device for the detection of security marks in a plastic card by means of a lighting which excites luminescence according to one of the claims 1 to 9, **characterized in that** the lighting source (4) is a NIR diode laser, the light of which has a wavelength of approx. 800 Nm.

11. Device for the detection of security marks in a plastic card by means of a lighting which excites luminescence according to one of the claims 1 to 9, **characterized in that** the lighting source (4) is a Deuterium or Hg or Na or a halogen lamp, or a laser.

12. Device for the detection of security marks in a plastic card by means of a lighting which excites luminescence according to one of the claims 1 to 9, **characterized in that** the lighting source (4) is a light emitting diode with light of a wavelength of approx. 365 Nm or a microchip laser with a capacity of 1 mW and a wavelength of 355 Nm or 266 Nm.

13. Device according to one of the claims 10 to 12, **characterized in that** the luminescent light of the security features is received by a detector (5), which is a CMOS camera or a line camera or a photodetector, which are suitable for reading a machine readable security feature, like data matrix codes.

## Revendications

1. Carte plastique se composant d'une couche de recouvrement (1) et d'au moins une couche de noyau fonctionnant comme couche de marquage (2), dont les qualités de luminescence peuvent être changés in situ au moyen d'un rayonnement infrarouge proche ou ultraviolet, formant des caractéristiques de sécurité qui sont invisibles à l'oeil nu, de sorte que les caractéristiques de sécurité soient ainsi détectables, au moyen de l'excitation par une source lumineuse (4), due à la luminescence des marques, **caractérisée en ce que** la couche de recouvrement (1) n'est transparente que pour l'infrarouge proche et/ou pour l'ultraviolet, et **en ce que** les caractéristiques de sécurité sont détectables en raison de la modification de la luminescence, quand la source lumineuse (4) rayonne de la lumière infrarouge proche et/ou ultraviolette sur la carte plastique, mais sont invisibles à l'oeil.

2. Carte plastique selon la revendication 1, **caractérisée en ce que** la couche de recouvrement (1) est également marquée par une inscription invisible.

3. Carte plastique selon l'une des revendications 1 ou 2, **caractérisée en ce que** le caractéristique de sécurité se compose d'un flot de données important, sous la forme d'un Data Matrix Code.

4. Carte plastique selon l'une des revendications 1 à 3, **caractérisée en ce que** la couche de marquage (2) est dopé pour absorber la lumière dans la gamme de l'infrarouge proche et/ou de l'ultraviolet.

5. Carte plastique selon l'une des revendications 1 à 4, **caractérisée en ce que** la couche de marquage (2) est opaque dans le spectre entier de la lumière ultraviolette, visible et infrarouge proche.

6. Carte plastique selon l'une des revendications indiquées ci-dessus, **caractérisée en ce que** la couche de marquage (2) se compose d'un système adhésif modifié, qui exécute une réaction de réticulation pendant l'irradiation ultraviolette tout en changeant localement ses caractéristiques de luminescence.

7. Carte plastique selon l'une des revendications indiquées ci-dessus, **caractérisée en ce que** la couche de marquage (2) est un film d'encre d'imprimerie ou un vernis ou une substance contenant un adhésif ou un agent de collage.

8. Carte plastique selon l'une des revendications indiquées ci-dessus, **caractérisée en ce que** la couche de recouvrement (1) est une couche diélectrique.

9. Carte plastique selon l'une des revendications indiquées ci-dessus, **caractérisée en ce que** un colorant luminescent est arrangé dans la couche de marquage (2), qui, une fois exposé aux rayons de lumière d'une longueur d'onde d'approximativement 266 millimètres, subit des changements chimiques, de telle manière que l'identité et la longueur d'onde du spectre d'émission soient modifiées.

10. Dispositif pour la détection des marques de sécurité dans une carte plastique au moyen d'une éclairage excitant la luminescence selon l'une des revendications 1 à 9, **caractérisé en ce que** la source lumineuse (4) est un laser à diode d'infrarouge proche dont la lumière a une longueur d'onde d'approximativement 800 nanomètres.

11. Dispositif pour la détection des marques de sécurité dans une carte plastique au moyen d'une éclairage excitant la luminescence selon l'une des revendications 1 à 9, **caractérisée en ce que** la source lumineuse (4) est une lampe de deutérium ou de Hg ou de Na, ou une lampe halogène, ou un laser.

12. Dispositif pour la détection des marques de sécurité dans une carte plastique au moyen d'une éclairage excitant la luminescence selon l'une des revendications 1 à 9, **caractérisé en ce que** la source lumineuse (4) est une diode électroluminescente dont la lumière a une longueur d'onde d'approximativement 365 nanomètres, ou un laser à micro chip ayant une capacité de 1 mW et une longueur d'onde de 355 nanomètres ou de 266 nanomètres.

13. Dispositif selon l'une des revendications 10 12, **caractérisé en ce que** la lumière luminescente des caractéristiques de sécurité est reçue par un détecteur (5), qui est une caméra C.M.O.S. ou une caméra de ligne ou un détecteur photoélectrique, qui convient pour déchiffrer un caractéristique de sécurité lisible par machine, comme le Data Matrix Code.
